# DEMANDE DE BREVET EUROPEEN

(11) **EP 0 691 554 A1**
(43) Date de publication de la demande: **10.01.1996**
(21) Numéro de dépôt: 95401596.2
(22) Date de dépôt: 04.07.1995
(51) Int. Cl.: G02B 6/12

(54) **Procédé de réalisation de guides d'onde circulaires et enterres**

(30) Priorité: 06.07.1994 FR 9408343
(71) Demandeur: COMMISSARIAT A L'ENERGIE ATOMIQUE, F-75015 Paris (FR)
(72) Inventeur: Biasse, Béatrice, F-38410 Uriage (FR); Pigeon, Florent, F-42100 Saint-Etienne (FR)
(74) Mandataire: Dubois-Chabert, Guy

(57) **Abrégé**

Le procédé de préparation d'un guide d'onde enterré dans un substrat en verre, selon l'invention, comprend les étapes suivantes:
- une étape de réalisation d'un guide d'onde (28,38) par échange d'ions, en surface de chacun de deux substrats (22,32) en verre,
- une étape d'alignement des deux substrats, de telle façon que les surfaces dans lesquelles on a réalisé les guides d'onde soient en regard l'une de l'autre,
- une étape de fusion directe des deux substrats.

Avantage: le guide d'onde a une section transversale circulaire.

## Description

### Domaine technique auquel se rapporte l'invention

La présente invention se rapporte à la réalisation de circuits en optique intégrée sur verre.

Pendant longtemps, l'optique intégrée (sur verre et silicium) a été en concurrence avec la technologie des composants à fibres optiques. Actuellement, on sait réaliser des composants passifs (coupleurs), des capteurs (mécaniques, chimiques), des composants actifs (amplificateurs) à l'aide de ces deux technologies. Contrairement aux composants à fibres optiques, les composants réalisés en optique intégrée offrent la potentialité d'être fabriqués en grande quantité et à bas prix.

En outre, les circuits en optique intégrée sur verre sont considérés comme de très bons candidats pour les applications de traitement du signal optique dans le domaine des communications, des capteurs, des coupleurs, ou pour la réalisation de circuits actifs tels que lasers et amplificateurs.

La technique consistant à utiliser des guides d'onde sur verre pour la réalisation de composants en optique intégrée est intéressante pour plusieurs raisons. Elle met en jeu un procédé à basse température ne nécessitant qu'un seul niveau de masquage qui est relativement simple et peu coûteux. Les guides présentent en outre de faibles pertes, par exemple dans le proche infrarouge, en particulier lorsqu'ils sont enterrés, puisqu'il y a alors diminution des pertes par diffusion par les irrégularités en surface. En adaptant les conditions de fabrication, les profils d'indice et les caractéristiques désirées peuvent être obtenus. Le verre est également intéressant pour sa faible sensibilité à l'endommagement optique, pour sa compatibilité d'indice avec les fibres optiques et pour la possibilité qu'il offre d'obtenir des composants biréfringents. Le coût potentiel de production est, en plus, relativement bas.

### Etat de la technique antérieure

Différents procédés sont décrits dans la littérature pour la réalisation de circuits en optique intégrée sur verre.

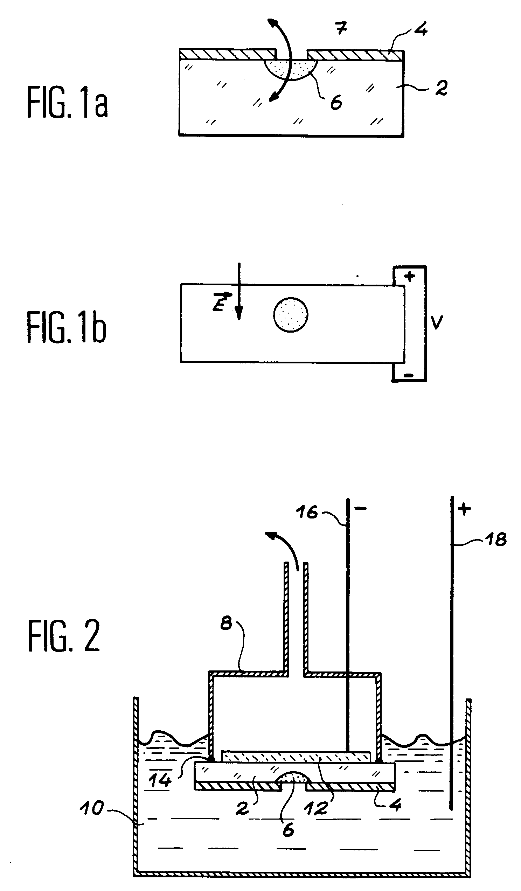

La technique d'échange d'ions est de loin la plus utilisée à cause de sa facilité de mise en oeuvre. Elle est décrite notamment dans l'ouvrage de S. Najafi, intitulé "Introduction to glass integrated optics" Artech House, London, 1992. Un exemple de réalisation utilisant cette technique va être brièvement rappelée, en liaison avec les figures 1a, 1b et 2. Elle comporte essentiellement deux étapes. Dans une première étape, on dépose, sur un substrat de verre 2 (figure la) un masque d'aluminium 4. L'ensemble est plongé dans un bain de sel fondu, contenant par exemple des cations Ag⁺ (ou K⁺...). Aux endroits où le masque est ouvert, il va y avoir échange entre les cations Na⁺ du verre et les cations Ag⁺ du bain de sel, ce qui produit une élévation de l'indice de réfraction dans la zone de diffusion et entraîne la formation d'un guide d'onde semi-elliptique 6 (voir figure la) dont la dimension latérale dépend de la largeur de la fenêtre 7 pratiquée dans le masque d'aluminium.

Dans une seconde étape, le guide est enterré. Pour cette opération, un champ électrique 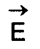 est appliqué entre les faces du substrat 2, ce qui entraîne la migration de la zone dopée avec des ions Ag⁺. Les ions migrant plus rapidement dans la direction du champ électrique, le profil d'indice devient circulaire, ainsi qu'illustré sur la figure lb. Le profil obtenu, avec un guide d'onde enterré, permet de limiter les pertes par diffusion par la surface. La mise en oeuvre pratique de l'enfouissement du guide est illustrée sur la figure 2. La plaque de verre 2 comportant un guide semi-elliptique 6 avec éventuellement le masque 4 ferme une cellule 8 étanche en téflon, à l'intérieur de laquelle on fait le vide. La plaque de verre est ensuite plongée dans un bain 10 de sel en fusion, à la température d'environ 400°C. Le champ électrique est obtenu par l'emploi de deux électrodes 16, 18 l'une qui est plongée directement dans le bain de sel et l'autre qui est en contact avec la surface supérieure du substrat en verre 2 par l'intermédiaire d'un contact d'aluminium 12. Une différence de potentiel de plusieurs centaines de volts est appliquée entre ces deux électrodes. Le sel en fusion (par exemple du NaNo₃) est conducteur et un problème important de cette réalisation est donc lié au risque de court-circuit que peut provoquer un défaut dans l'étanchéité 14 entre la cellule en téflon et la plaquette de verre 2.

Le procédé est par ailleurs relativement lourd et ne convient pas à une mise en oeuvre industrielle, pour la production de composants en grande série.

Un autre procédé a été proposé, qui permet de réaliser un guide circulaire en associant deux guides semi-élliptiques. Cette façon de procéder élimine l'étape d'enterrement du guide par effet d'un champ électrique. Mais elle nécessite l'utilisation d'une colle qui modifie considérablement la répartition en intensité du champ proche en sortie de guide. Le film de colle a un indice optique, qui, même s'il était très proche de celui du guide (ce qui n'est jamais le cas), perturbe considérablement le profil d'indice de la structure guidante. De plus, une pression extérieure, même très importante, ne suffit pas à éliminer la présence d'un léger film d'air qui perturbe de la même façon qu'un film de colle la répartition en intensité du champ proche. Enfin, il est impossible d'envisager cette méthode dans le cas de guide d'onde monomode à 1,3 ou 1,5 µm. En effet, dans ce cas, le diamètre du coeur du guide est égal à quelques microns et ce procédé se heurte alors à deux problèmes rédhibitoires :
- la dimension des guides impose une technologie d'assemblage qui permet de résoudre le problème d'alignement des deux structures (l'alignement doit être de l'ordre du micron),
- la présence d'un film de colle et/ou d'un film d'air, à l'interface, perturbe considérablement la propagation, étant donné la très faible dimension des guides (on observe déjà une perturbation très importante pour un guide dont le coeur a un diamètre de 50 µm).

### Exposé de l'invention

La présente invention a pour objet de résoudre ces problèmes et propose à cette fin un procédé de préparation d'une guide d'onde enterré dans un substrat en verre, ce procédé comprenant les étapes suivantes :
- une étape de réalisation d'un guide d'onde par échange d'ions, à la surface de chacun de deux substrats en verre,
- une étape d'alignement des deux substrats, de telle façon que les surfaces dans lesquelles on a réalisé les guides d'onde de l'étape précédente soient en regard l'une de l'autre,
- une étape de fusion directe des deux substrats.

Ce procédé de réalisation de guides d'onde dans un verre présente les avantages suivants :
- il élimine l'étape d'enterrement des guides d'onde par application d'un champ électrique. Ainsi qu'on l'a déjà expliqué ci-dessus, cette étape est de mise en oeuvre délicate du point de vue industriel, et pose des problèmes de réalisation et de reproductibilité, alors que le procédé selon l'invention est facilement industrialisable,
- il permet la fabrication en parallèle (sur un même substrat) de plusieurs composants optiques, ce qui permet de réduire considérablement les coûts de fabrication,
- il permet la réalisation de composants multimodes et également de composants monomodes,
- il n'y a pas d'interface de collage ; ce procédé ne modifie donc pas les caractéristiques optiques des guides,
- il est possible de réaliser de nombreux composants tels que des miroirs ou des connecteurs optiques, enterrés et bien centrés par rapport au guide obtenu par le procédé selon l'invention,
- il permet une maîtrise de la profondeur désirée de l'enfouissement du guide.

L'invention a également pour objet un procédé de réalisation d'un ensemble comportant un miroir et un guide optique enterré dans un substrat en verre, comprenant les étapes suivantes :
- une étape de réalisation d'un guide d'onde par échange d'ions, en surface de chacun de deux substrats en verre,
- une étape de réalisation d'une demi-cavité en bout de chaque guide,
- une étape de dépôt d'argent sur les faces de chaque demi-cavité,
- une étape d'association des deux substrats par fusion directe.

L'invention a également pour objet un procédé de réalisation d'un dispositif de connexion d'une fibre optique comportant les étapes suivantes :
- une étape de réalisation d'un guide d'onde par échange d'ions, en surface de chacun des deux substrats en verre,
- une étape de réalisation d'une demi-cavité en bout de chaque guide, chaque demi-cavité ayant une largeur sensiblement égale au coeur de la fibre qui doit être introduite et une hauteur sensiblement égale à la moitié du coeur de la même fibre,
- une étape d'association des deux substrats par fusion directe.

Des modes particuliers de réalisation de l'invention apparaissent dans les revendications dépendantes.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- les figures 1a et 1b, déjà décrites, schématisent les étapes d'un procédé de réalisation d'un guide d'onde enterré dans un substrat de verre, selon l'art antérieur,
- la figure 2, déjà décrite, représente un dispositif expérimental de l'art antérieur utilisé pour enterrer les guides,
- les figures 3a à 3c représentent les étapes essentielles d'un procédé selon l'invention,
- les figures 4a à 4c illustrent des répartitions géométriques du profil d'indice d'un guide optique obtenu par le procédé selon l'invention,
- les figures 5a et 5b illustrent d'autres étapes selon des modes particuliers de mise en oeuvre de l'invention,
- les figures 6a à 6c représentent des étapes de marquage et de réalisation de guides dans le cadre d'une mise en oeuvre collective de l'invention,
- les figures 7a à 7c représentent des étapes de réalisation d'un miroir, associé à un guide obtenu par un procédé selon l'invention,
- les figures 8a à 8d représentent des étapes de réalisation d'une connexion à une fibre optique, mettant en oeuvre un procédé de réalisation d'un guide enterré, selon l'invention.

### Description détaillée de modes de réalisation de l'invention

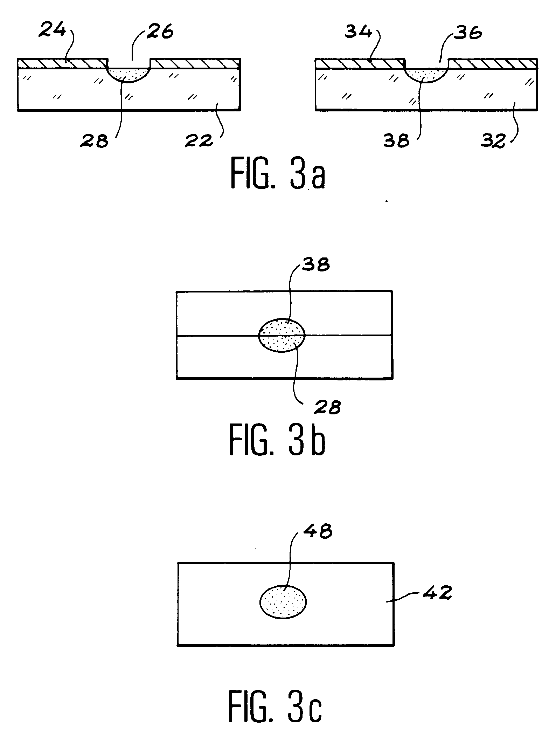

Les figures 3a à 3c illustrent les étapes d'un procédé selon l'invention, pour réaliser un guide d'onde enterré dans un substrat en verre.

A la surface de deux substrats en verre 22, 32, de préférence de qualité microélectronique, sont disposés deux masques d'aluminium 24, 34, présentant des fenêtres respectivement désignées par 26 et 36. On entend par substrat de qualité microélectronique : des substrats présentant un état de surface peu rugueux (rugosité inférieure à quelques nanomètres) et plan. A l'aide d'une technique classique d'échange d'ions, telle que celle décrite dans l'introduction à la présente demande, on réalise deux guides d'onde 28, 38, en surface des substrats de verre 22 et 32. La largeur de ces guides est définie par la largeur des fenêtres 26, 36 avantageusement identiques pratiquées dans les masques d'aluminium, et l'échange d'ions peut se faire en même temps pour les deux structures.

Après avoir enlevé les masques d'aluminium, on aligne les deux substrats 22 et 32, ainsi qu'illustré sur la figure 3b, de telle façon que les surfaces dans lesquelles on a réalisé les guides d'onde 28 et 38 soient en regard l'une de l'autre. On réalise ensuite une fusion directe (en terminologie anglo-saxonne "Direct Wafer Bonding") qui consiste à lier les deux solides, simplement par une mise en contact l'un contre l'autre de ces derniers. La fusion repose sur l'établissement de forces d'adhérence entre la totalité des deux surfaces en regard, ces forces intervenant pour des distances entre les deux surfaces inférieures à quelques dizaines d'Angströms. Ces forces sont les forces de Waals, les forces électrostatiques et les interactions chimiques. Le système constitué par les deux substrats en contact cesse d'évoluer lorsque toutes les forces d'attraction sont en équilibre avec les forces de répulsion entre les nuages électroniques des deux surfaces (répulsion de Born) . Les deux substrats sont alors "préfusionnés".

La qualité de ce préfusionnement dépend entre autres de :
- la contamination particulaire des surfaces : l'opération de mise en contact est réalisée de préférence en salle blanche, de classe 100 ou 10.
- l'hydrophilie des deux surfaces : la présence de groupements OH, à raison de 4 à 6 par nm, permet l'absorption de molécules d'eau. Ces groupements OH favorisent la réalisation d'une préfusion de bonne qualité. Un nettoyage adéquat des substrat par exemple dans un bain chimique acide, peut donc être réalisé pour rendre les surfaces hydrophiles.
- la planéité des surfaces : il est préférable de choisir des surfaces suffisamment proches l'une de l'autre.
- la rugosité des surfaces, qui est, de façon préférentielle, inférieure à quelques nanomètres (par exemple 1 nm).

La fusion directe comprend avantageusement un traitement thermique qui consiste en un recuit sous une atmosphère contrôlée, à une température inférieure à celle à laquelle l'échange a été réalisé. En général, ce recuit se fera entre 200 et 600°C, sous atmosphère d'azote ou d'oxygène. La nécessité de choisir une température de recuit inférieure à la température à laquelle l'échange ionique a été réalisé est liée au fait que, sinon, les ions qui ont été implantés dans le verre par l'étape d'échange d'ions vont diffuser dans le substrat en verre pendant toute la durée du recuit ; l'ensemble des propriétés optiques du guide sera alors largement modifié, notamment le profil d'indice et les dimensions du guide. Ce recuit permet d'augmenter la tenue mécanique de la structure ainsi réalisée.

Après cette étape de traitement thermique, on obtient une structure telle que celle illustrée sur la figure 3c, où la référence 42 représente le substrat en verre obtenu par réunion des deux substrats 22 et 32, et où le guide 48 représente le guide obtenu après réunion des deux guides 38 et 28. Il est important de noter qu'avec une telle technique, l'interface de fusion entre les deux substrats et les deux guides 28 et 38 est invisible, les deux matériaux ne formant plus qu'une seule structure. Si l'on désire rompre les liaisons établies entre les deux surfaces, il faut, lorsque le procédé comporte un traitement thermique, appliquer un effort de traction de l'ordre de plusieurs centaines de Kgf et la fracture n'intervient pas à l'interface de fusion mais est répartie dans le matériau. L'adhérence ainsi obtenue est donc très élevée.

Dans certains cas, une fois que l'échange d'ions a été réalisé et que les masques métalliques ont été enlevés, une étape d'amincissement et/ou de polissage des deux surfaces des substrats 22 et 32 est nécessaire, avant de les mettre en contact l'une avec l'autre.

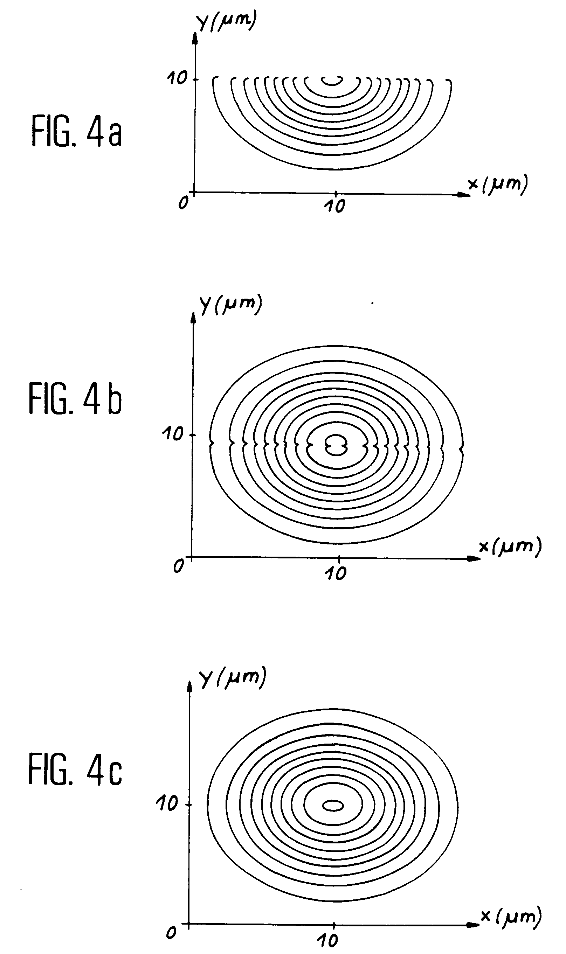

La principale raison pour amincir (ou graver) les substrats est de contrôler la géométrie du profil d'indice, afin d'obtenir des guides les plus circulaires possible. En effet, dans certains cas, la circularité des guides peut être un paramètre important, car elle permet un bon coefficient de couplage avec les fibres optiques. Or, parfois, l'étape d'échange ionique conduit à une répartition géométrique du profil d'indice telle que celle représentée sur la figure 4a. Sur cette figure, on peut facilement remarquer des irrégularités dans la zone proche de l'interface supérieure, c'est-à-dire de la surface à travers laquelle l'échange d'ions a été réalisé. Si l'on procède alors à la fusion directe sans prendre soin d'éliminer ces irrégularités, la répartition géométrique du profil d'indice du guide obtenu aura l'allure représentée sur la figure 4b. En outre, le guide sera d'autant plus déformé que ses dimensions seront faibles, ce qui est le cas des guides monomodes.

La meilleure façon d'éliminer ces irrégularités est de réaliser un enlèvement de matière avant de procéder à la fusion des deux substrats. Si on prend soin de graver les substrats sur une épaisseur suffisante, la zone d'irrégularités sera ainsi supprimée, et, après fusion directe le guide obtenu sera parfaitement circulaire même pour les faibles dimensions. La répartition géométrique du profil d'indice obtenu est alors voisine de celle représentée sur la figure 4c. L'épaisseur à enlever en surface du substrat peut être de l'ordre de quelques dixièmes de micromètres.

Après cette étape d'amincissement (encore appelée gravure), on peut polir les deux plaquettes dans le but d'avoir des états de surface permettant la fusion directe.

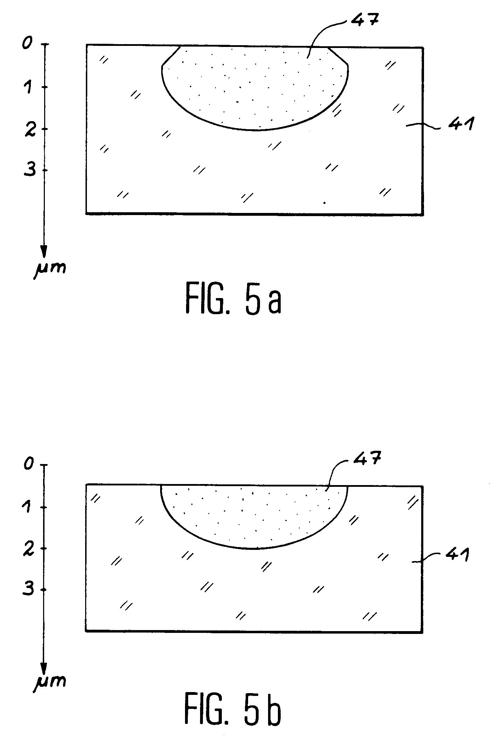

Les figures 5a et 5b représentent une vue en coupe du guide d'onde 47 (indice n₁) obtenu dans un substrat en verre 41 (indice n₂), après l'étape d'échange d'ions, avant gravure (figure 5a) et après gravure (figure 5b). On voit, d'après ces figures, que pour obtenir un guide approximativement semi-circulaire, on doit enlever une épaisseur d'environ 0,5 µm. On procède par exemple à une gravure plasma (de type RIE) à basse pression (inférieure à 0,05 millibar). Le gaz utilisé est le CHF₃ et le temps nécessaire à la gravure d'une épaisseur de 0,5 µm est d'environ 10 minutes. Pour obtenir un bon état de surface afin de réaliser la fusion directe dans de bonnes conditions, on peut effectuer ensuite un polissage mécanochimique pendant environ 10 minutes à l'aide de Syton et d'un feutre très doux.

On peut aussi procéder à l'amincissement par gravure chimique ou mécanique.

Eventuellement, avant de mettre les substrats en contact l'un avec l'autre, on peut les rendre hydrophiles par un traitement chimique adéquat. Un exemple d'un tel traitement consiste à plonger les substrats pendant 10 minutes dans un mélange de H₂SO₄ et de H₂O₂ à 140°C, à rincer les plaquettes à l'eau et à les sécher correctement. Cette étape sera réalisée en salle blanche, car elle sera en général immédiatement suivie de la mise en contacts des substrats, et du recuit.

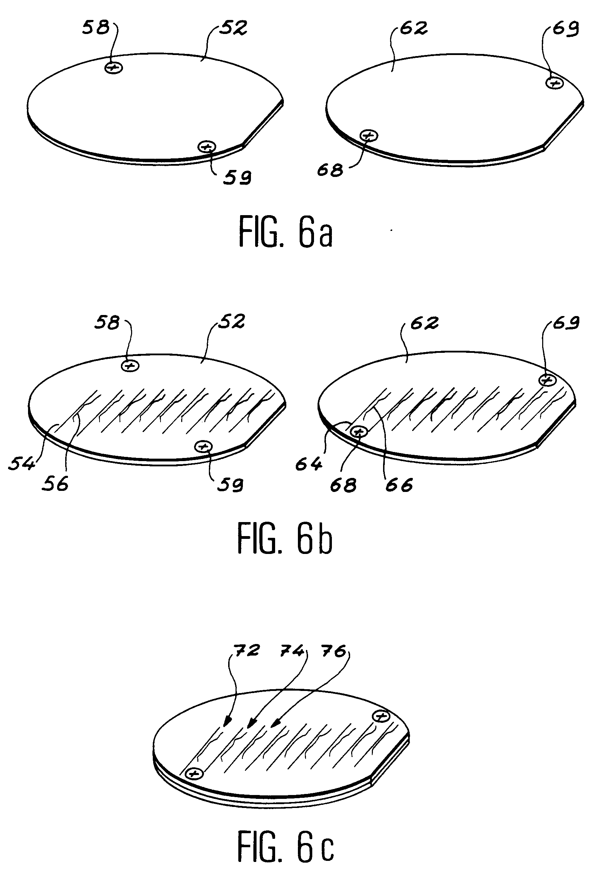

Les figures 6a à 6c représentent les étapes de mise en oeuvre collective du procédé décrit ci-dessus, pour la fabrication par exemple de coupleurs optiques. Pour chaque coupleur, on réalise, à l'aide d'un masque présentant les fenêtres adéquates, deux guides 54, 56, et 64, 66, dans chacun des deux substrats 52, 62 (figure 6b) . Les deux substrats sont ensuite mis en contact l'un avec l'autre, puis on réalise l'étape de fusion décrite ci-dessus. On obtient ainsi une série de coupleurs, tels que ceux référencés 72, 74, 76 sur la figure 6c. Ultérieurement, on peut découper le substrat afin de former des coupleurs individuels.

Le positionnement des deux substrats 52, 62, l'un par rapport à l'autre, peut être problématique. En effet, la qualité des composants optiques fabriqués dépend du bon positionnement des guides semi-circulaires en regard l'un de l'autre. La tolérance de positionnement est d' environ 1 µm dans le cas de la réalisation de guides monomodes. Cette tolérance peut être beaucoup plus importante si l'on réalise des composants multimodes. On peut donc réaliser, dès le départ, sur les surfaces des substrats 52 et 62, des motifs de positionnement 58, 59, 68, 69. Ces motifs permettent de positionner les masques par rapport au substrat et les substrats l'un par rapport à l'autre. Sans ces motifs, le positionnement des deux substrats peut être délicat, car ils sont complètement transparents et l'échange d'ions ne modifie pas suffisamment l'indice du verre pour que les guides soient apparents et permettent le positionnement.

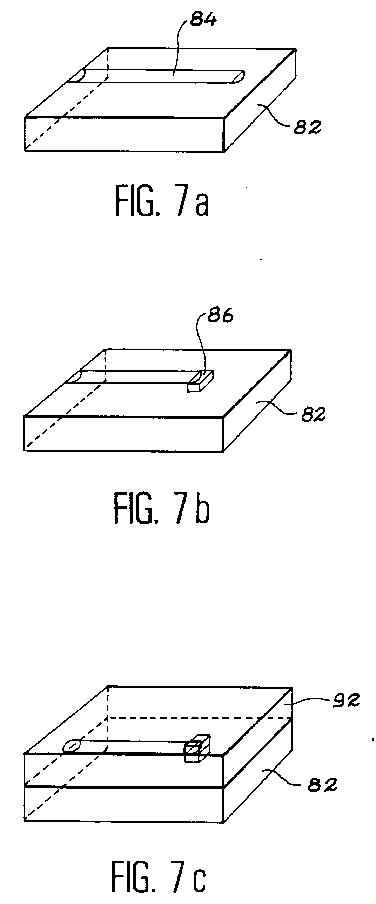

Les figures 7a à 7c illustrent la réalisation d'un miroir. Tout d'abord, ainsi qu'illustré sur la figure 7a, on réalise dans un substrat 82 un guide 84 par échange d'ions. Puis (figure 7b) on réalise une demi-cavité 86 en bout de chaque guide, par exemple par une gravure plasma (de type RIE) à basse pression (inférieure à 0,05 millibar). Le gaz utilisé est le CHF₃ et le temps nécessaire à une gravure de 2 µm de hauteur est d'environ 40 minutes.

On réalise ensuite un dépôt, par exemple d'argent, sur les faces de chaque demi-cavité 86. On peut ensuite préparer la surface du substrat 82, par l'amincissement et le polissage, et on associe ensuite par fusion directe deux substrats 82, 92 préparés de la même façon.

Pour une gravure de la demi-cavité 86 de l'ordre de 2 µm, le miroir en fin de procédé a alors sensiblement les mêmes dimensions que le guide d'onde qui est alors monomode aux longueurs d'onde utilisées dans le domaine des télécommunications.

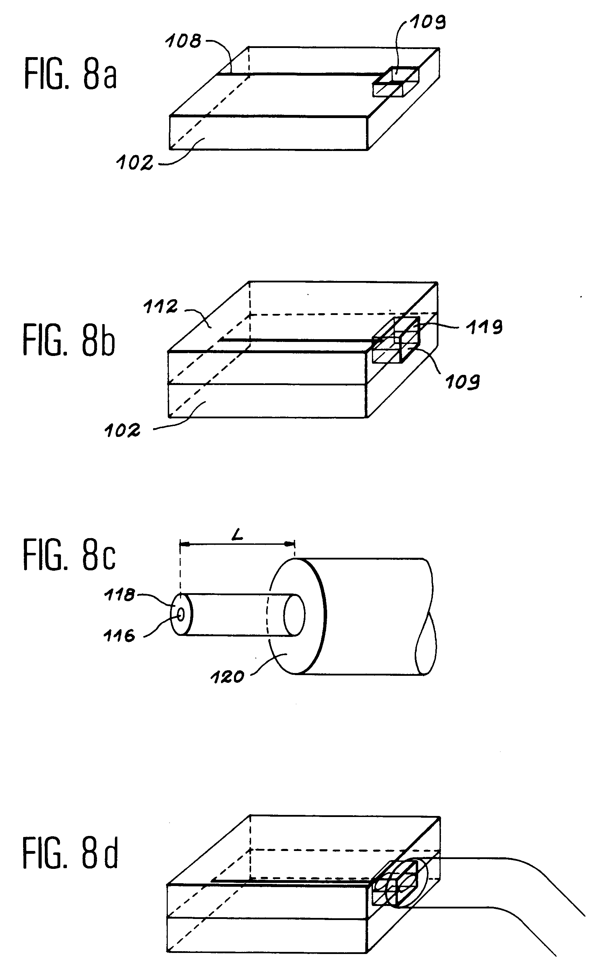

Les figures 8a à 8d représentent les étapes de réalisation d'un dispositif permettant la connexion à une fibre optique. Dans un substrat 102 (figure 8a), on réalise un guide d'onde 108 par échange d'ions, par exemple de façon à obtenir en fin de procédé un guide unimodal à 0,6 µm. Puis, on réalise une cavité 109 à l'extrémité du guide et centrée par rapport à ce dernier. Typiquement, une telle cavité aura une largeur de 125 µm, une hauteur de 62 µm et une profondeur par exemple de 3 mm. Pour réaliser cette cavité, une gravure chimique est préférable, par exemple on plonge le substrat 102 dans un bain d'attaque constitué d'un mélange de HF et de NH₄F, en utilisant un masque constitué d'un film en alliage Au-Cr obtenu par évoporation sous vide. On associe ensuite par fusion directe deux substrats 102, 112 (figure 8b) préparés de la même façon. La cavité finale est constituée de l'association des deux demi-cavités 109 et 119. On prépare ensuite (figure 8c) une fibre optique (ici une fibre optique unimodale à 0,6 µm) dont le coeur optique 116 présente les mêmes dimensions que le guide enterré réalisé dans le verre. La gaine optique 118 d'une telle fibre a un diamètre de l'ordre d'environ 125 µm, et est protégée par un revêtement polymère 120, qu'on élimine sur une longueur L correspondant à la profondeur de la cavité, ici environ 3 mm. L'introduction de l'extrémité de la gaine optique dans la cavité permet de réaliser la connexion à la fibre optique (figure 8d). L'intérêt d'une telle structure est l'autopositionnement de la fibre (à la fois verticalement et horizontalement) par rapport au guide optique enterré.

Les données numériques ci-dessus relatives aux dimensions de la cavité ne sont nullement limitatives. Il suffit que ces dimensions permettent d'introduire et de maintenir la fibre autopositionnée par rapport au guide optique enterré. Il suffit par exemple que la cavité ait une largeur et une hauteur de dimensions sensiblement égales au diamètre du coeur de la fibre.

Les applications industrielles de la présente invention sont celles de l'optique intégrée en général. On peut en effet envisager grâce à ce procédé la fabrication collective d'une multitude de composants :
- composants passifs pour les télécommunications,
- capteurs tels que des capteurs interferométriques ou polarimétriques, etc...

## Revendications

1. Procédé de préparation d'un guide d'onde enterré dans un substrat en verre, comprenant les étapes suivantes :
- une étape de réalisation d'un guide d'onde (28, 38)par échange d'ions, en surface de chacun de deux substrats (22, 32) en verre,
- une étape d'alignement des deux substrats, de telle façon que les surfaces dans lesquelles on a réalisé les guides d'onde soient en regard l'une de l'autre,
- une étape de fusion directe des deux substrats,

2. Procédé selon la revendication 1, caractérisé en ce que l'étape de fusion directe comprend un traitement thermique consistant en un recuit sous atmosphère contrôlée.

3. Procédé de préparation d'un guide d'onde selon l'une des revendications 1 ou 2, caractérisé en ce que les deux substrats sont en verre, de qualité microélectronique.

4. Procédé de préparation d'un guide d'onde selon l'une des revendications 1 à 3, caractérisé en ce que la rugosité des surfaces des deux substrats est inférieure à quelques nm.

5. Procédé de préparation d'un guide d'onde selon la revendication 1, comprenant une étape d'amincissement de la surface de chacun des deux substrats après l'étape d'échange d'ions.

6. Procédé selon la revendication 5, dans lequel l'étape d'amincissement est réalisée par gravure plasma, par gravure chimique ou mécanique.

7. Procédé selon la revendication 1, comportant, avant l'étape d'alignement, une étape de polissage.

8. Procédé selon la revendication 7, l'étape de polissage étant une étape mécanochimique.

9. Procédé selon la revendication 1 comportant en outre une étape de traitement chimique pour rendre les surfaces des substrats hydrophiles préalablement à l'étape d'alignement.

10. Procédé de réalisation d'un ensemble comportant un miroir et un guide optique enterré dans un substrat en verre, comprenant les étapes suivantes :
- une étape de réalisation d'un guide d'onde (84) par échange d'ions, en surface de chacun de deux substrats (82, 92) en verre,
- une étape de réalisation d'une demi-cavité (86) en bout de chaque guide,
- une étape de dépôt d'argent sur les faces de chaque demi-cavité (86),
- une étape d'association des deux substrats par fusion directe.

11. Procédé selon la revendication 10, la demi-cavité (86) en bout de chaque guide étant réalisée par gravure plasma à basse pression.

12. Procédé de réalisation d'un dispositif de connexion d'une fibre optique comportant les étapes suivantes :
- une étape de réalisation d'un guide d'onde (108) par échange d'ions, en surface de chacun des deux substrats (102, 112) en verre,
- une étape de réalisation d'une demi-cavité (109, 119) en bout de chaque guide, chaque demi-cavité ayant une largeur sensiblement égale au coeur de la fibre qui doit être introduite et une hauteur sensiblement égale à la moitié du coeur de la même fibre,
- une étape d'association des deux substrats (102, 112) par fusion directe.

13. Procédé selon la revendication 12, la cavité étant réalisée par gravure chimique.
